# EUROPEAN PATENT APPLICATION

(11) **EP 1 797 767 A1**
(43) Date of publication of application: **20.06.2007**
(21) Application number: 05788077.5
(22) Date of filing: 03.10.2005
(51) Int. Cl.: A23G 1/00

(54) **PROCESS FOR PRODUCING FOOD WITH MULTICOLORED PATTERN**

(30) Priority: 04.10.2004 JP 2004291300
(71) Applicant: AKUTAGAWA CONFECTIONERY CO., LTD., Tokyo 170-0003 (JP)
(72) Inventor: AKUTAGAWA, Tokuji, 1700003 (JP)
(74) Representative: Caldwell, Judith Margaret
(86) International application number: PCT/JP2005/018277
(87) International publication number: WO 2006/038580

(57) **Abstract**

A process for producing a food product with multicolored decorative pattern, including introducing two or more colored fluid food materials in a single mold so as to attain formation of various patterns/configurations. In the filling of two or more colored fluid food materials in the mold through injection, neighboring materials after the injection of the two or more colored fluid food materials collide with and compete with each other so as to develop various linear borderlines. Thus, there is provided a process for producing a food with multicolored pattern.

## Description

The present invention relates to a process for producing a food product having a multicolored continuous pattern from fluid food materials of identical properties.

The patent documents listed below disclose processes and apparatuses for producing a food product having different colors in three or more divided regions thereof from two or more viscous fluid food materials of different colors through molding. According to the invention disclosed in Patent Document 1 below, as illustrated in FIG. 3 thereof, fluid food materials A and B having mutually different colors are not forwarded through corresponding separate nozzle outlets of a food material supply apparatus 71. Instead, by means of rotation of valves 56 and 57, the food materials A and B are forwarded through a group of passages 14; i.e., the first to third passages, and then discharged through a single conduit 15. According to the invention described in this publication, after the discharge through the conduit 15, the fluid food materials of different colors are forwarded through passages provided in the plates, and ultimately, the food materials are discharged simultaneously in layers through a discharge port 20.
The above-described invention has a drawback in that, even when fluid food materials of considerably high viscosity are used, neighboring food materials may be mixed (as a result of eddy formation at corners or like positions) in the passages or at corners and discharge ports of the passages. Also, since only one outlet port is provided, the end products are limited to those in which layers are formed starting at that outlet port.
Meanwhile, with an apparatus equipped with a single nozzle having a mechanism designed for discharging highly fluid food materials, such as chocolate, of two colors separately on a color basis, the discharged fluid chocolate normally presents a continuous irregular pattern as shown in the Patent Document 2 listed below.
Patent Document 1: JP-A-10-234303
Patent Document 2: JP-A-9-23818

The present invention provides a process for producing a wide variety of food products having a various decorative color pattern. According to the present invention, even when the fluid food materials have relatively low viscosity, the fluid food materials are not mixed in a single passage, since they are forwarded to a nozzle outlet for discharge into a mold through mutually independent passages, each being assigned for a food material of one specific color. Moreover, according to the present invention, a color pattern is formed by selecting points of injection from each nozzle facing the mold, and also by making use of the phenomenon that the injected food materials spread out while forming concentric ripples.

In other words, the present invention has been made on the basis of a technical principle that is quite different from that in the above-described prior art techniques. Specifically, the present inventor has found that, when fluid food materials of two or more colors are simultaneously injected into a single mold, the materials which differ in color spread away from the points of injection while forming concentric ripples, and that the spreading movement of fluid food materials that are injected at neighboring points results in their colliding at a minimum distance point between the two points of injection and "competing" to form a straight boundary between them, thus completing the invention.

Accordingly, an object of the present invention is to provide a process for producing a food product with a multicolored decorative pattern from fluid food materials having a predetermined viscosity, comprising:
simultaneously injecting, directly into a mold having no dividing walls, fluid food materials of two or more colors having identical viscosity at a same injection rate, through nozzles having outlets of an identical diameter and provided for the respective colors, towards two or more points of injection predetermined in the mold so as to form the decorative color pattern of the end product;
allowing the injected fluid food materials to gradually spread out while forming concentric ripples until neighboring fluid food materials collide at a minimum distance point therebetween, said minimum distance being identical between any neighboring fluid food materials, and, due to their fluidity, mutually and evenly compete to form a straight boundary therebetween which extends in opposite directions starting from the point of collision, to thereby fill the mold while developing an integrated pattern; and
solidifying the resultant molded product naturally or through temperature control.

The above-described "competing principle" is not the only key factor for reproducing the present invention; i.e., production of food products having a desired multicolored pattern, and in order to create a particular multicolored pattern repeatedly, certain requirements must be met. That is, the nozzle outlets must have the same diameter, and moreover, the fluid food materials must have the same viscosity and must be simultaneously injected at the same injection rate, regardless of the difference in color, towards certain predetermined positions in the mold until the mold is filled. When fluid food materials are injected into a mold in such a manner that these requirements are met, initially at the points of injection where the fluid food materials hit the mold, the materials continuously accumulate to form Mt. Fuji-like cones, and subsequently in the mold, they spread away from respective points of injection, forming concentric ripples until neighboring fluid food materials collide at a minimum distance point therebetween, and, because the materials are mutually identical, having the same viscosity and the same mass, when injection is performed continuously, the neighboring fluid food materials mutually and evenly meet ("compete") to form a straight boundary therebetween that extends in opposite directions starting from the point of collision until they fill the mold, thus forming a constantly reproducible, specific pattern as a whole. Afterwards, the multicolored-pattern-bearing food product resulting from the fluid food materials is solidified naturally or through temperature control, depending on the properties of the obtained product.

Examples of food materials which change their state from fluid to solid and which fit the purpose of the present invention include food materials having relatively low viscosities, such as chocolate, cheese, jelly, and *mizu-yokan* (an agar-based sweet).
When chocolate is used as a fluid food material of the present invention, its viscosity is between 500 cp and 20,000 cp, preferably between 1,000 cp and 2,000 cp.
The outer shape of a food product with a multicolored pattern, which is the end product, may differ depending on the shape of the mold employed. For example, if a mold having a flat bottom is employed, the resulting end product has a flat upper surface, because a portion of the material that is brought into contact with the flat bottom will become an upper portion of the end product.
Alternatively, if the bottom of the mold has a concave-convex surface, the resultant food product has a top that has concave-convex pattern.
Since not only the top but also the sides of the end product are defined by the mold, a pattern similar to a ridge along the edge of a coin may be formed.
Moreover, if the bottom of the mold is partially or entirely provided with an engraving of, for example, a chrysanthemum, a crest, or a trademark in a concave/convex pattern and such a mold is filled with fluid food materials as described above, there can be produced an even more elaborate and attractive food product with a multicolored pattern.
Furthermore, if fluid food materials as described above are introduced into a mold and subsequently the mold is further filled with a fluid food material of the same or different type, the bottom of the end product can be provided with an additional layer of the latter fluid food material so that the entire bottom is covered by the layer at a certain thickness.

According to the present invention, a food product with a predetermined multicolored pattern can be produced in a short time, through a single injection/filling of fluid food materials of different colors into a single mold. This can be attained by simultaneous injection of fluid food materials of two or more colors having the same viscosity performed in such a manner that the materials are injected through nozzles having nozzle outlets of a certain common diameter, each nozzle being provided and assigned for a respective color, at the same injection rate for all the colors, and also by selecting the aforementioned positions of injection in the mold so as to obtain an intended pattern of the final food product. Although for the sake of convenience the above description of the present invention is provided while taking an example of producing a single food product with a multicolored pattern in a single mold, in actual practice, the process is performed by use of a mold having two or more (e.g., 12) mold cavities therein, whereby many food products can be obtained simultaneously. Also, according to the present invention, after fluid food materials of two or more colors are injected into a mold, they spread while forming concentric ripples in the mold until materials injected through neighboring nozzles collide with each other. However, since the materials are of the same viscosity, the collided materials neither form turbulence at the colliding point nor are they pressed one-sidedly. Rather, the materials mutually and evenly compete, forming a boundary therebetween to run in opposite directions perpendicular to the direction of collision. Thus, the mold is gradually filled with the materials of different colors whose boundaries are in straight-line segments, to thereby give a food product generally having a multicolored pattern which is defined by the number and the position of injection points in the mold, and the shape of walls and bottom of the mold cavity, except for the mold top, i.e., opening, to be filled with the fluid food materials.

[Fig. 1] Fig. 1 is an explanatory diagram for showing how fluid food materials are injected toward the bottom of the mold employed in the present invention.
[Fig. 2] Fig. 2 is an explanatory diagram for showing the state where portions of fluid food materials are injected at the predetermined positions in the mold shown in Fig. 1.
[Fig. 3] Fig. 3 is a central cross sectional view of Fig. 2, for showing a state of the materials injected through the nozzles.
[Fig. 4] Fig. 4 is an explanatory diagram for showing a state where fluid food materials are further injected, subsequent to the state shown in Fig. 3.
[Fig. 5] Fig. 5 is an explanatory diagram for showing a state where fluid food materials are further injected, subsequent to the state shown in Fig. 4.
[Fig. 6] Fig. 6(a) is a plan view which shows a state where the mold is filled with two fluid food materials having mutually different colors, wherein the formed boundary is a diagonal line. Fig. 6(b) is a cross sectional view taken along line A-A of Fig. 6(a). Fig. 6(c) is a cross sectional view showing the case where a concave pattern is provided at the bottom of the mold shown in Fig. 6(b), and this concave is filled with another fluid food material that differs from those shown in Fig. 6(b).
[Fig. 7] Fig. 7(a) is a plan view of a resultant mold obtained through the steps of Fig. 1 to Fig. 5. Fig. 7(b) is a cross sectional view taken along line B-B of Fig. 7(a). Fig. 7(c) is a cross sectional view showing the case where a concave pattern is provided at the bottom of the mold shown in Fig. 7(b), and this concave is filled with another fluid food material that differs from those shown in (b).
[Fig. 8] Fig. 8(a) is a plan view of a pattern or mode, which differs from those shown in Figs. 6 and 7. Fig. 8(b) is a cross sectional view taken along line C-C of Fig. 8(a).
Fig. 8(c) is a cross sectional view showing the case where a concave pattern is provided at the bottom of the mold shown in Fig. 8(b), and this concave is filled with a fluid food material.
[Fig. 9] Fig. 9(a) is a plan view of a pattern or mode, which differs from those shown in Figs. 6, 7, and 8. Fig. 9(b) is a cross sectional view taken along line D-D of Fig. 9(a).
[Fig. 10] Fig. 10(a) is a plan view of a pattern or mode, which differs from those shown in Figs. 6, 7, 8, and 9. Fig. 10(b) is a cross sectional view taken along line E-E of Fig. 10(a).
[Fig. 11] Fig. 11 is a cross sectional view similar to Fig. 9(b), wherein the unfilled volume is filled with another fluid food material.

1 ... Mold
2 ... Nozzle outlet
3 ... Spread of material in the form of concentric ripples
4, 6, 10, 11, 12 ... Boundary
7 ... Depressed portion provided at the mold bottom

According to the present invention, basically, fluid food materials of two or more colors which are injected into a single mold are allowed to separately spread concentrically, like water circles that spread out, until fluid food materials injected through neighboring nozzles collide and mutually compete as they spread while forming straight boundary lines, whereby a food product with a specific multicolored pattern can be obtained.

### EXAMPLE 1

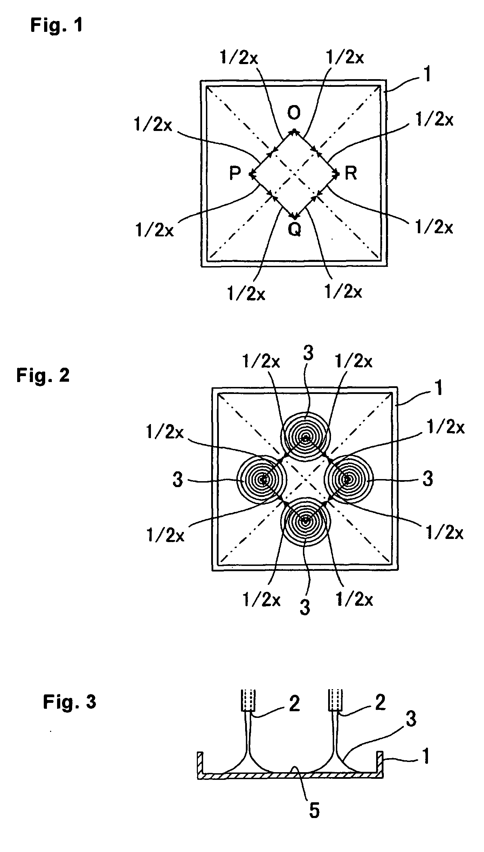

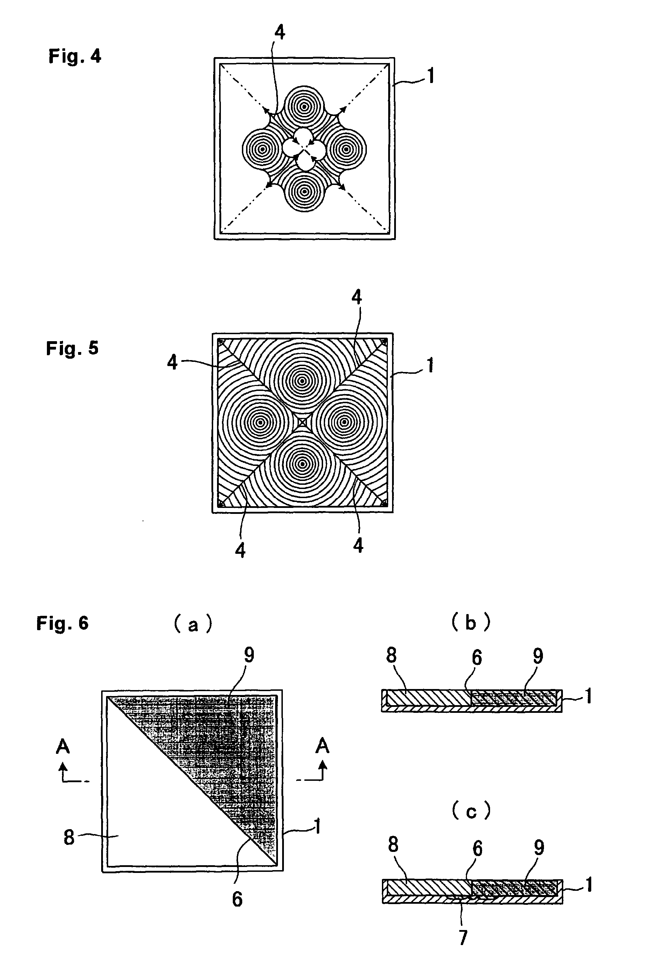

With reference to Figs. 1 to 5, production processes of the present invention will be described, in which the food product with a multicolored pattern is chocolate. Figs. 6 to 11 show exemplary patterns formed in molds through use of the production processes. In these examples, for the sake of convenience, a single food product with a multicolor pattern (chocolate) is produced in a single mold. However, in actual practice, 2 to 40 multicolored food products are produced in a single mold through simultaneous injection of fluid food materials thereto.
Fig. 1 is a plan view of a mold 1, and the four points 0, P, Q, and R indicate the positions where fluid food materials are injected through nozzle outlets 2 located above the points. It should be noted that these four points O, P, Q, and R are imaginary ones, just to show the injection positions, and they are determined considering the positional relation between the mold and nozzles fixed above the mold. Suppose the distances between O and P, 0 and R, Q and P, and Q and R are 1(x), the distances from these points to their corresponding middle points are 1/2(x). The four double dashed line segments between the center of the mold 1 and the respective corners represent boundaries formed when fluid food materials of the same mass and the same viscosity are injected, and these lines are not actually marked on the mold but are imaginary ones.

Fig. 2 is a plan view showing the initial state of the fluid food materials which are poured or injected through the nozzle outlets 2 shown in Fig. 3 (only two nozzle outlets are depicted because Fig. 3 is a central cross section of Fig. 2) into the mold 1, wherein the materials start to spread out centering the points 0, P, Q, and R shown in Fig. 1. In this stage where chocolate in a fluid state spreads from the respective falling points, since the speed of spreading is slower than the speed of falling (note that the spreading chocolate continuously receives resistance due to the friction against the bottom surface 5 of the mold 1), concentric ripples 3, which are like water circles, are formed.

Fig. 4 is an explanatory diagram showing the movement of fluid chocolate materials which, after having started to spread forming water-ripple-like circles as described above, collide at four contact points and immediately thereafter mutually compete to spread in opposite directions shown by the arrows, changing the directions by 90 degrees to the direction of collision and forming straight boundaries 4.

With reference to Fig. 5, following the state shown in Fig. 4, fluid chocolate materials injected through neighboring nozzle outlets 2 spread to reach the corners of the mold 1 while competing together, and subsequently, the fluid chocolate materials are supplied through the four nozzles until the mold cavity is filled.
When the mold 1 is filled with the fluid chocolate, the filling step is complete, and the mold is forwarded to a cooling step by means of a belt conveyor (not shown), where the chocolate material is solidified, to thereby produce a chocolate product with a two-colored pattern.

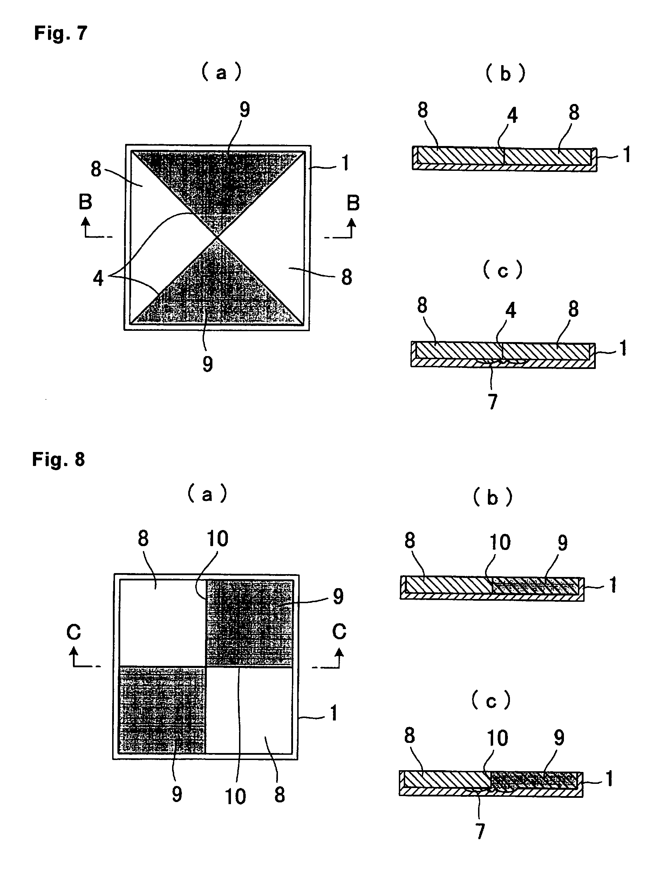

The resultant chocolate product formed in the mold 1 as shown in Figs. 1 to 5, composed of white chocolate 8 and dark chocolate 9, is shown in Fig. 7(a). Fig. 7(b) is a cross sectional view taken along line B-B of Fig. 7(a). Fig. 7(c) shows a way to enhance decorativeness of the product, in which the concave portion 7, which is an engraving of a chrysanthemum provided at a portion of the bottom 5 of a mold 1, is filled with dark-colored chocolate before the production steps of Figs. 7(a) and 7(b). As shown in Fig. 7(a), this chocolate product is composed of a dark-colored portion 9 (upper and lower sections) and a white-colored portion 8 (right and left sections).

### EXAMPLE 2

Figs. 6(a) and 6(b) show a different pattern from Fig. 7. The pattern in this figure is divided into two halves; a dark-colored portion 9 and a white-colored portion 8, with the diagonal line being their boundary 6. With reference to Fig. 6(c), the concave portion, which is an engraving of a chrysanthemum provided at the bottom of a mold 1, is filled with dark-colored chocolate, and over this, fluid white-color chocolate 8 and dark-color chocolate are simultaneously poured, to thereby produce a united product. This product can be obtained by injecting fluid white chocolate and fluid dark chocolate individually at positions which are on a line crossing the boundary 6 at right angle and are on opposite sides of the boundary 6 at equal distance therefrom.

### EXAMPLE 3

Figs. 8(a) and 8(b) show another example. This pattern is achieved by setting four injection points 0, P, Q, and R so that they are located at the same distance from the boundaries 10 and injecting fluid white chocolate 8 at two points that are on a first diagonal line and fluid dark chocolate 9 at the remaining two points that are on a second diagonal line. Fig. 8(c) shows an embodiment in which a concave portion 7, which is an engraving of a chrysanthemum same as those shown in Figs. 7(c) and 6(c), is provided at the bottom of a mold 1 and is filled with dark-colored chocolate.

### EXAMPLE 4

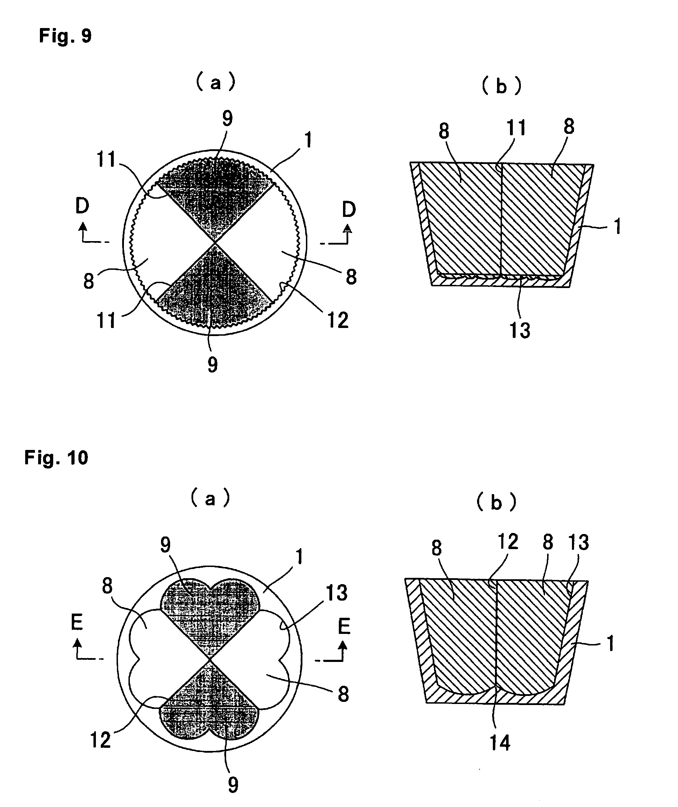

Unlike any of the above embodiments, the inner side wall of the mold cavity shown in Fig. 9 has a corrugated surface 12 where the parallel lines run in a vertical direction. Two chocolate materials 8, 9 which have mutually different colors are injected as shown in Figs. 1 to 5, and the material boundary in the mold is indicated as boundary 11. If concave-convex portions 13 in wavy form are provided at the bottom of the mold 1, the surface of the chocolate product demolded from the mold 1 can have a corresponding wavy pattern.

### EXAMPLE 5

Fig. 10 shows an embodiment in which, instead of the corrugated surface 12 of the inner side wall of the mold of Fig. 9, an uneven (concave/convex) profile 13 which is like a four-leaf clover, is provided in the mold 1. White chocolate material 8 and dark chocolate material 9 are injected into the mold 1 so that boundaries 12 are produced therebetween. At the bottom of the mold 1, ridges 14 are provided on the mold side so that the boundaries between the "four leaves of clover" of the chocolate product are made lower than the remaining portions.

### EXAMPLE 6

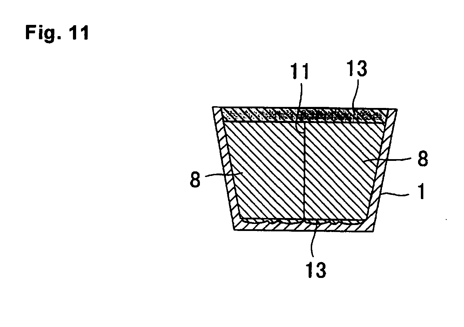

Fig. 11 shows an embodiment in which, into the mold 1 of Fig. 9(b), white chocolate material 8 and dark chocolate material 9 are simultaneously injected so as to leave a slight space at the top of the mold 1, and afterwards, the space is filled with another chocolate material having a different color until the entire upper surface of the mold 1 has been covered.

The present invention is applicable to the production of chocolate, cheese, jelly, *mizu-yokan* (an agar-based sweet), and the like, which is produced from fluid food materials of two or more colors and which has color boundaries formed on the basis of the so-called "competing" phenomenon of fluids, observed when the fluid food materials are injected or deposited into a mold. This competing phenomenon does not occur when the fluid materials have low viscosities like water, or excessively high viscosities. Preferably, the viscosity of the fluid food materials, which may differ depending on the materials per se, falls within a range of 500 cp to 20,000 cp.

## Claims

1. A process for producing a food product with a multicolored decorative pattern from fluid food materials having a predetermined viscosity, comprising:
simultaneously injecting, directly into a mold having no dividing walls, fluid food materials of two or more colors having identical viscosity at a same injection rate, through nozzles having outlets of an identical diameter and provided for the respective colors, towards two or more points of injection predetermined in the mold so as to form the decorative color pattern of the end product;
allowing the injected fluid food materials to gradually spread out while forming concentric ripples until neighboring fluid food materials collide at a minimum distance point therebetween, said minimum distance being identical between any neighboring fluid food materials, and, due to their fluidity, mutually and evenly compete to form a straight boundary therebetween which extends in opposite directions starting from the point of collision, to thereby fill the mold while developing an integrated pattern; and
solidifying the resultant molded product naturally or through temperature control.

2. The process according to claim 1, wherein said food product with a multicolored decorative color pattern is selected from chocolate, cheese, jelly, and *mizu-yokan* (an agar-based sweet).

3. The process according to claim 1, wherein said fluid food materials are fluid chocolate materials having a viscosity of 500 cp to 20,000 cp.

4. The process according to claim 1, wherein the mold has a box shape having a flat bottom.

5. The process according to claim 1, wherein the mold has a box shape having an uneven bottom.

6. The process according to claim 4 or 5, wherein the mold has an uneven inner side surface.

7. The process according to claim 1, wherein said mold having no dividing walls has a concave/convex pattern provided partially or entirely over its bottom, toward which said fluid food materials are injected.

8. The process according to claim 1, further comprising, after the mold is filled with the fluid food materials, the step of injecting another fluid food material thereover.

9. The process according to claim 1, further comprising the step of subjecting the mold inside to silk-screening printing to produce a printed pattern, so that the fluid food materials introduced to the mold are unified with the printed pattern.
